# EUROPEAN PATENT APPLICATION

(11) **EP 2 602 926 A1**
(43) Date of publication of application: **12.06.2013**
(21) Application number: 11192447.8
(22) Date of filing: 07.12.2011
(51) Int. Cl.: H02M 7/00, B60L 15/00

(54) **An electronic power converter**

(71) Applicant: Visedo Oy, 53850 Lappeenranta (FI)
(72) Inventor: Järveläinen, Tero, 53850 Lappeenranta (FI); Tarkiainen, Antti, 53500 Lappeenranta (FI)
(74) Representative: Berggren Oy Ab

(57) **Abstract**

An electronic power converter comprises an AC-to-DC converter stage (105) between an alternating voltage terminal and a direct polarity intermediate circuit (104), and at least two DC-to-DC converter stages (106, 107) connected to the intermediate circuit. The electronic power converter is implemented with modules (108, 109) so that one of the modules constitutes the main circuit of the AC-to-DC converter stage and another module (109) constitutes at least partly the two or more DC-to-DC converter stages. The DC-to-DC converter stages can be used, for example, for controlling the operation of an overvoltage protection resistor and the operation of an energy-storage such as a capacitor or a battery. The implementation of the two or more DC-to-DC converter stages that are needed for different purposes with a single module increases the integration level of the electronic power converter and thereby improves its cost efficiency.

## Description

### Field of the invention

The invention relates generally to electronic power converters. More particularly, the invention relates to an assembly of an electronic power converter. Furthermore, the invention relates to a mobile working machine comprising an electromechanical power transmission chain.

### Background

An electromechanical power transmission chain comprises typically one or more electrical machines and an electronic power converter. The electromechanical power transmission chain can be a series transmission chain where one of the electrical machines operates as generator and the electronic power converter is arranged to convert the electrical voltages produced by the generator into electrical voltages having amplitudes and frequencies suitable for the one or more other electrical machines. The generator can be driven with a combustion engine that can be e.g. a diesel engine, an Otto-cycle engine, or a turbine engine. The other electrical machines can be, for example, electrical motors in wheels of a mobile working machine. The electronic power converter comprises typically an intermediate circuit, a converter stage between the generator and the intermediate circuit and one or more other converter stages between the intermediate circuit and the other electrical machines. Furthermore, there is usually a need for a converter stage between the intermediate circuit and an overvoltage protection resistor and for a converter stage between the intermediate circuit and an energy-storage such as a battery and/or a high capacitance capacitor. It is also possible that the electromechanical power transmission chain is a parallel transmission chain where the generator is occasionally used as a motor that assists the combustion engine, especially when high output power is needed. In this case, the electronic power converter comprises typically an intermediate circuit, a converter stage between the generator and the intermediate circuit, and one or more converter stages between the intermediate circuit and one or more energy-storages. Furthermore, also in conjunction with a parallel transmission chain, there is usually a need for a converter stage for controlling the operation of an overvoltage protection resistor.

As the electronic power converter comprises many converter stages, the number of power electronic components is high and, consequently, the arrangement of the components and cabling between the components may be complicated. A typical way to increase the integration level of an electronic power converter is to use modules which have an integrated structure and comprise power electronic components so that, for example, a main circuit of the converter stage connected to the generator can be implemented with a single module. Typically, a module of the kind mentioned above comprises switching branches each of which comprising a first electrical node, a second electrical node, a third electrical node, and controllable power switches for selecting whether the third electrical node is connected to the first electrical node or to the second electrical node. As the number of phases of an alternating voltage system is typically three, a standard module contains three switching branches. Each controllable power switch may be, for example but not necessarily, an insulated gate bipolar transistor "IGBT" provided with an anti-parallel diode.

All the converter stages of the electronic power converter are not mutually similar. For example, the converter stage between the generator and the intermediate circuit is typically a three phase AC-to-DC converter, whereas the converter stage between the intermediate circuit and the energy-storage is a DC-to-DC converter. This fact entails challenges regarding to the implementation and costs of the electronic power converter.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention, there is provided a new electronic power converter. The electronic power converter according to the invention comprises:
- an alternating voltage terminal,
- a first direct voltage terminal,
- a second direct voltage terminal,
- a direct polarity intermediate circuit,
- a first converter stage between the alternating voltage terminal and the direct polarity intermediate circuit,
- a second converter stage between the direct polarity intermediate circuit and the first direct voltage terminal, and
- a third converter stage between the second direct voltage terminal and one of the following: the direct polarity intermediate circuit, the first direct voltage terminal.

The electronic power converter is implemented with first and second modules each of which having an integrated structure and comprising switching branches, where each of the switching branches comprises a first electrical node, a second electrical node, a third electrical node, and controllable power switches for selecting whether the third electrical node is connected to the first electrical node or to the second electrical node. The switching branches of the first module constitute at least partly the first converter stage between the alternating voltage terminal and the direct polarity intermediate circuit. At least one of the switching branches of the second module constitutes at least partly the second converter stage, and at least one of the rest of the switching branches of the second module constitutes at least partly the third converter stage.

As described above, the second module is used for implementing both the second converter stage and the third converter stage. The second converter stage can be, for example, a DC-to-DC converter between the direct polarity intermediate circuit and an energy-storage such as a capacitor or a battery. The third converter stage can be, for example, a DC-to-DC converter between the direct polarity intermediate circuit and an overvoltage protection resistor. The implementation of two or more converter stages for different purposes with a single module increases the integration level of the electronic power converter. This, in turn, improves the cost efficiency of the electronic power converter. The first and second modules are, advantageously but not necessarily, similar to each other so that the number of the switching branches of the first module is the same as the number of the switching branches of the second module. In this case, both of the modules can usually be standard modules having three switching branches. This further improves the cost efficiency of the electronic power converter.

In accordance with the second aspect of the invention, there is provided a new mobile working machine. The mobile working machine comprises:
- a combustion engine, and
- an electromechanical power transmission chain between the combustion engine and one or more wheels of the mobile working machine,
wherein the electromechanical transmission chain comprises at least one electronic power converter according to the present invention.

The mobile working machine comprises preferably a liquid cooling system arranged to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

A number of non-limiting exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figure 1 shows a schematic illustration of an electronic power converter according to an embodiment of the invention,
figure 2 shows a schematic illustration of an electronic power converter according to an embodiment of the invention,
figure 3 shows a schematic illustration of an electronic power converter according to an embodiment of the invention,
figure 4 shows a schematic illustration of an electronic power converter according to an embodiment of the invention,
figure 5 shows a schematic illustration of an electronic power converter according to an embodiment of the invention, and
figure 6 shows a schematic illustration of a mobile working machine according to an embodiment of the invention.

### Description of the exemplifying embodiments

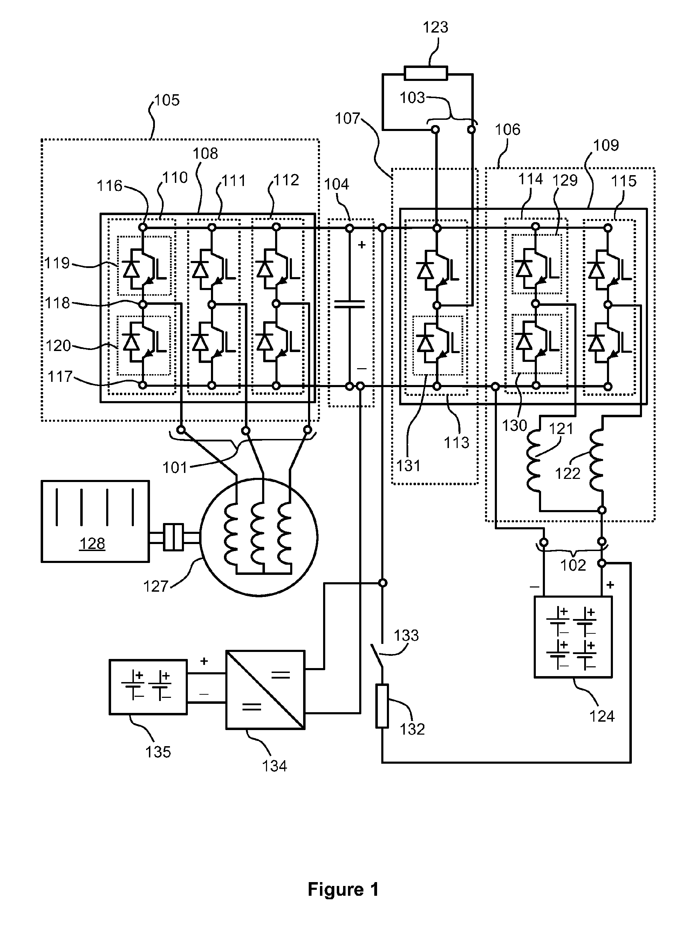

Figure 1 shows a schematic illustration of an electronic power converter according to an exemplifying embodiment of the invention. In the exemplifying case shown in figure 1, the electronic power converter is a part of an electromechanical power transmission chain that further comprises an electrical machine 127 connected to an engine 128. The electronic power converter comprises an alternating voltage terminal 101, a first direct voltage terminal 102, and a second direct voltage terminal 103. In the exemplifying case shown in figure 1, the alternating voltage terminal 101 is connected to the electrical machine 127, and the electronic power converter comprises a battery 124 connected to the first direct voltage terminal 102 and an overvoltage protection resistor 123 connected to the second direct voltage terminal 103. The electromechanical power transmission chain illustrated in figure 1 is a parallel transmission chain where the electrical machine 127 can operate as a generator so that the battery 124 is charged but also as a motor that assists or replaces the engine 128 so that the battery is discharged. The electronic power converter comprises a direct polarity intermediate circuit 104 which is, in the exemplifying case shown in figure 1, a direct voltage intermediate circuit comprising a capacitor. The electronic power converter comprises a first converter stage 105 between the alternating voltage terminal 101 and the direct polarity intermediate circuit 104. The first converter stage is arranged to convert three-phase alternating voltage into direct voltage and vice versa. The electronic power converter comprises a second converter stage 106 that is a DC-to-DC converter between the direct polarity intermediate circuit 104 and the battery 124. The electronic power converter comprises a third converter stage 107 that is a DC-to-DC converter between the direct polarity intermediate circuit 104 and the overvoltage protection resistor 123.

The electronic power converter is implemented with first and second modules 108 and 109. Each of these modules has an integrated structure and comprises switching branches. The module 108 comprises switching branches 110, 111, and 112, and the module 109 comprises switching branches 113, 114, and 115. Each switching branch comprises a first electrical node, a second electrical node, a third electrical node, and controllable power switches for selecting whether the third electrical node is connected to the first electrical node or to the second electrical node. In the switching branch 110, the first electrical node is denoted with the reference number 116, the second electrical node is denoted with the reference number 117, the third electrical node is denoted with the reference number 118, and the controllable power switches are denoted with the reference numbers 119 and 120. Each controllable power switch may be, for example, an insulated gate bipolar transistor "IGBT" provided with an anti-parallel diode as illustrated in figure 1, or a gate-turn-off "GTO" thyristor provided with an anti-parallel diode, or some other suitable power electronic component. The modules shown in figure 1 are six pack modules because each of them comprises six controllable power switches. The modules can be, for example, SEMIKRON SKiM459GD12E4 six pack modules. It should be, however, noted that the principle of implementing two or more DC-to-DC converters with a single module is not limited to six pack modules and, furthermore, the modules of the electronic power converter do not necessarily have to be mutually similar.

The switching branches 110-112 of the first module constitute 108 the main circuit of the first converter stage 105 between the alternating voltage terminal and the direct polarity intermediate circuit. The switching branches 114 and 115 of the second module 109 constitutes together with inductor coils 121 and 122 the main circuit of the second converter stage 106. The switching branch 113 of the second module 109 constitutes the main circuit of the third converter stage 107. The first converter stage 105 can be operated, for example, as a pulse width modulated "PWM" inverter by directing appropriate control signals to the controllable power switches of the module 108. Control circuitries for producing the control signal are not shown in figure 1. The second converter stage 106 can be operated as a step-down DC-to-DC converter when transferring energy from the direct polarity intermediate circuit 104 to the battery 124, and as a step-up DC-to-DC converter when transferring energy from the battery 124 to the direct polarity intermediate circuit 104. Concerning for example the switching branch 114, the step-down operation can be achieved by switching a controllable power switch 129 on and off when the diode of a controllable power switch 130 operates as a free-wheeling diode. The step-up operation can be achieved by switching the controllable power switch 130 on and off when the diode of the controllable power switch 129 operates as a charging diode. The switching branches 114 and 115 are preferably operated in an interleaved mode in order to reduce the voltage ripple at the direct voltage terminal 102 and/or to reduce the switching losses. The overvoltage protection resistor 123 can be controlled to dissipate energy from the direct polarity intermediate circuit 104 by controlling a controllable power switch 131.

The electronic power converter may further comprise a resistor 132 and a switch 133 for providing an alternative energy transfer path between the direct polarity intermediate circuit 104 and the battery 124. The alternative energy transfer path can be used, for example, during a starting phase. Furthermore, the electronic power converter may comprise a DC-to-DC converter 134 and a battery 135 for pre-charging the direct polarity intermediate circuit 104. The DC-to-DC converter 134 may also be provided with means for charging the battery 135 from the direct polarity intermediate circuit. The battery can be, for example, a 12 V / 24 V battery. Typically, the battery 124 has a significantly higher voltage than 12 V or 24 V, i.e. the battery 124 is advantageously a high-voltage "HV" battery.

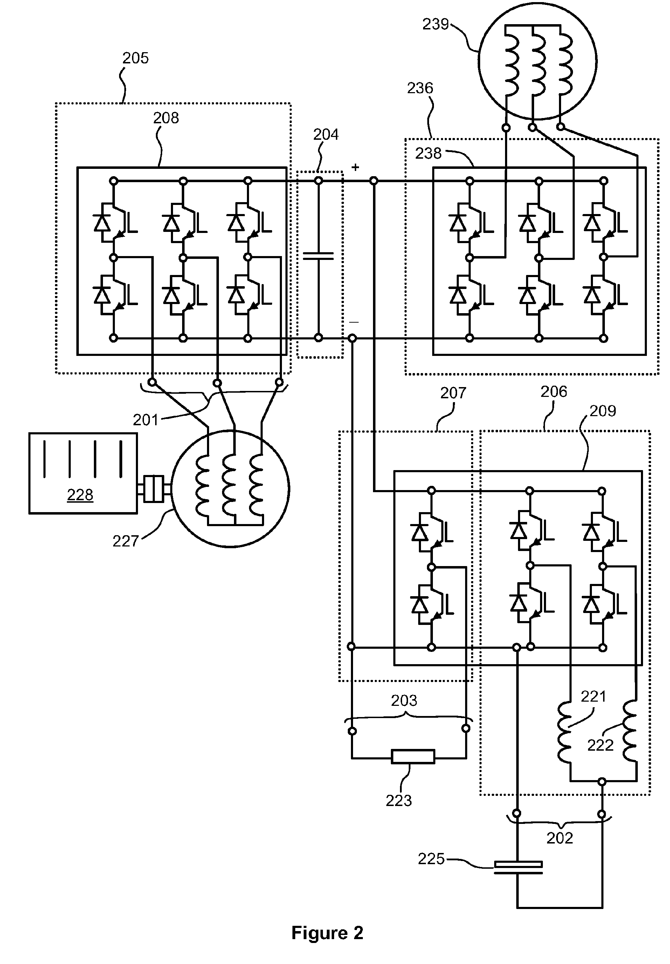

Figure 2 shows a schematic illustration of an electronic power converter according to an exemplifying embodiment of the invention. In the exemplifying case shown in figure 2, the electronic power converter is a part of a power transmission chain that further comprises an electrical machine 227 connected to an engine 228 and an electrical machine 239 that can be connected to e.g. a wheel of a mobile working machine or some other mechanical element. The electromechanical power transmission chain is a series transmission chain where the electrical machine 227 operates as generator and the electronic power converter is arranged to convert the electrical voltages produced by the generator into electrical voltages having amplitudes and frequencies suitable for the electrical machine 239. It is, however, occasionally possible that also the electrical machine 239 operates as a generator.

The electronic power converter comprises an alternating voltage terminal 201 connected to the electrical machine 227, another alternating voltage terminal connected to the electrical machine 239, a first direct voltage terminal 202 connected to an energy storage capacitor 225, and a second direct voltage terminal 203 connected to an overvoltage protection resistor 223. The electronic power converter comprises a direct polarity intermediate circuit 204 that is a direct voltage intermediate circuit. The electronic power converter comprises a first converter stage 205 between the alternating voltage terminal 201 and the direct polarity intermediate circuit 204. The electronic power converter comprises a second converter stage 206 between the direct polarity intermediate circuit 204 and the first direct voltage terminal 202. The electronic power converter comprises a third converter stage 207 between the direct polarity intermediate circuit 204 and the second direct voltage terminal 203. The electronic power converter comprises a fourth converter stage 236 between the direct polarity intermediate circuit 204 and the electrical machine 239.

The first converter stage 205 is implemented with a first module 208. The second and the third converter stages 206 and 207 are implemented with a second module 209 and with indictor coils 221 and 222. The fourth converter stage 236 is implemented with a module 238. The first and fourth converter stages 205 and 236 can be operated, for example, as pulse width modulated "PWM" inverters by directing appropriate control signals to the controllable power switches of the modules 208 and 238. The second converter stage 206 can be operated as a step-down DC-to-DC converter when transferring energy from the direct polarity intermediate circuit 204 to the energy storage capacitor 225, and as a step-up DC-to-DC converter when transferring energy from the energy storage capacitor 225 to the direct polarity intermediate circuit 204. The energy storage capacitor 225 can be, for example, an electric double-layer capacitor "EDLC" which is often called a "super capacitor". The third converter stage 207 can be operated according to the voltage of the direct polarity intermediate circuit 204 so that the overvoltage protection resistor 223 is allowed to dissipate energy from the direct polarity intermediate circuit 204 as long as the aforesaid voltage exceeds a predetermined limit.

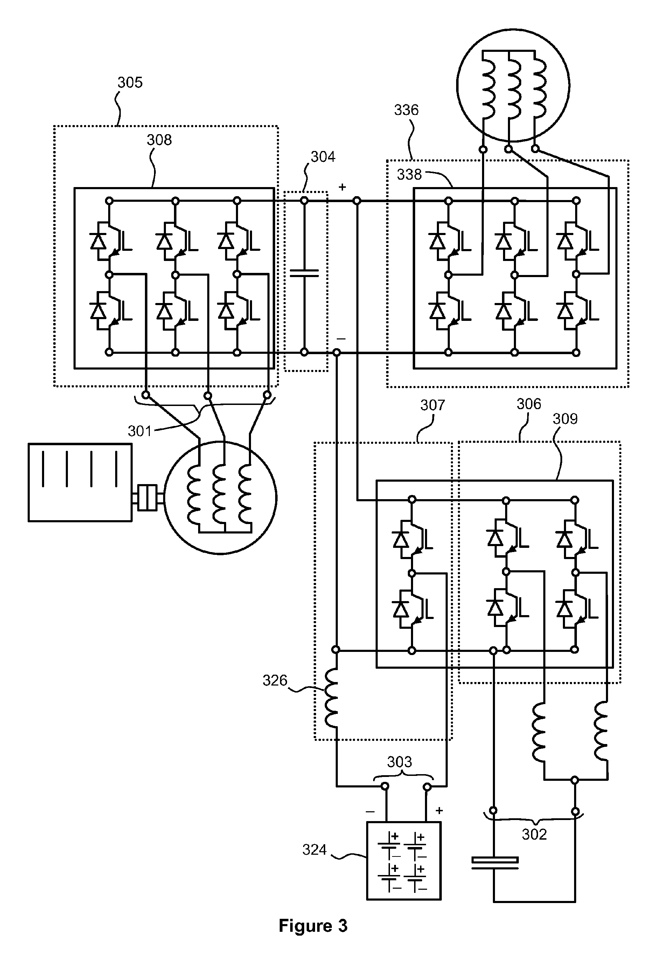

Figure 3 shows a schematic illustration of an electronic power converter according to an exemplifying embodiment of the invention. The electronic power converter comprises a direct polarity intermediate circuit 304, an alternating voltage terminal 301, a first direct voltage terminal 302, and a second direct voltage terminal 303. The electronic power converter comprises first, second, third, and fourth converter stages 305, 306, 307, and 336 which are implemented with modules 308, 309, and 338 as illustrated by figure 3. The electronic power converter illustrated in figure 3 is otherwise similar to the electronic power converter illustrated in figure 2, but the converter stage 307, which corresponds to the converter stage 207 shown in figure 2, is connected to a battery 324 instead of an overvoltage protection resistor. Furthermore, the converter stage 307 comprises an inductor coil 326. The converter stage 307 can be operated as a step-down DC-to-DC converter when transferring energy from the direct polarity intermediate circuit 304 to the battery 324, and as a step-up DC-to-DC converter when transferring energy from the battery 324 to the direct polarity intermediate circuit 304.

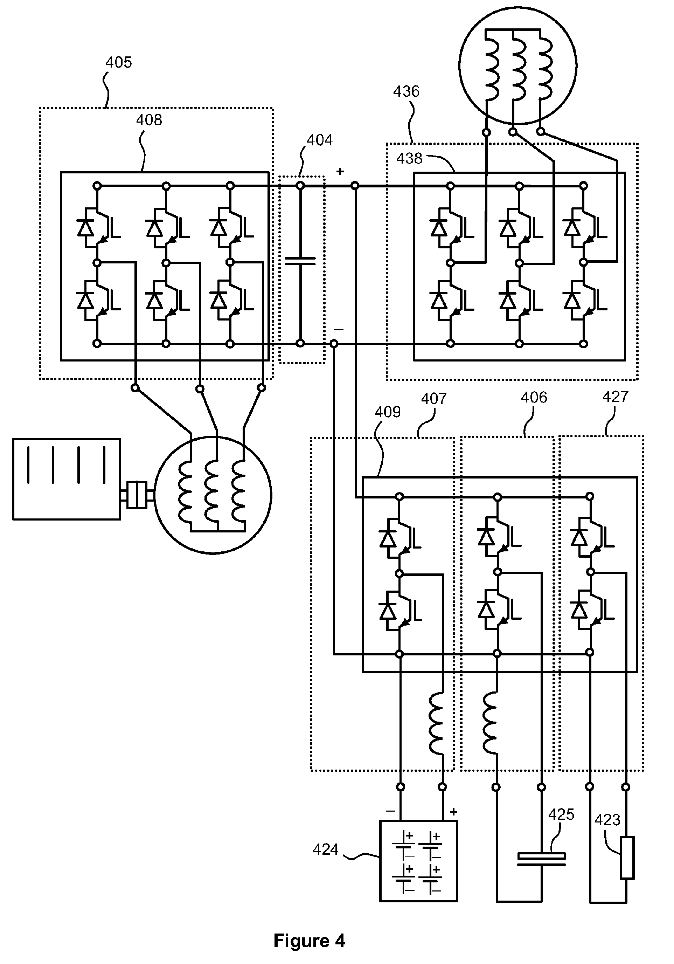

Figure 4 shows a schematic illustration of an electronic power converter according to an exemplifying embodiment of the invention. The electronic power converter comprises a direct polarity intermediate circuit 404, and converter stages 405, 406, 407, 427, and 436. The converter stages 405 and 436 are implemented with modules 408 and 438, respectively. The converter stages 406, 407, and 427 are implemented with a module 409 as illustrated by figure 4. The converter stage 406 can be operated as a step-down DC-to-DC converter when transferring energy from the direct polarity intermediate circuit 404 to an energy storage capacitor 425, and as a step-up DC-to-DC converter when transferring energy from the energy storage capacitor to the direct polarity intermediate circuit. Correspondingly, the converter stage 407 can be operated as a step-down DC-to-DC converter when transferring energy from the direct polarity intermediate circuit 404 to a battery 424, and as a step-up DC-to-DC converter when transferring energy from the battery 424 to the direct polarity intermediate circuit 404. The converter stage 427 is used for controlling the operation of an overvoltage protection resistor 423.

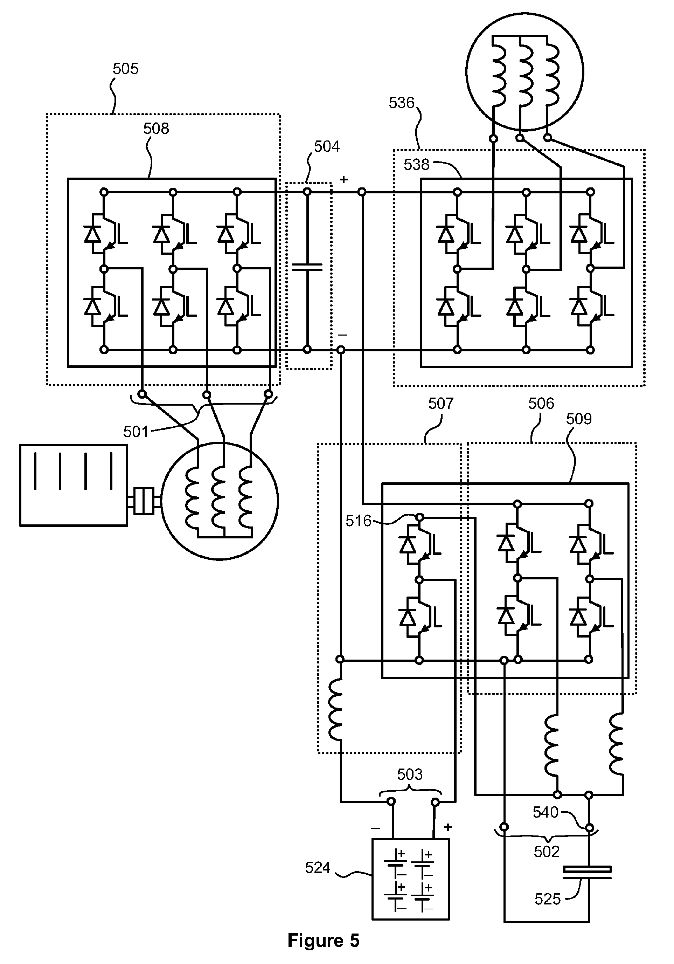

Figure 5 shows a schematic illustration of an electronic power converter according to an exemplifying embodiment of the invention. The electronic power converter comprises a direct polarity intermediate circuit 504, an alternating voltage terminal 501, a first direct voltage terminal 502, and a second direct voltage terminal 503. The electronic power converter comprises first, second, third, and fourth converter stages 505, 506, 507, and 536 which are implemented with modules 508, 509, and 538 as illustrated by figure 5. The electronic power converter illustrated in figure 5 is otherwise similar to the electronic power converter illustrated in figure 3, but a first electrical node 516 of a switching branch constituting the converter stage 507 is connected to the first pole 540 of the first direct voltage terminal 502 instead of the positive pole of the direct polarity intermediate circuit. The converter stage 506 can be operated as a step-down DC-to-DC converter when transferring energy from the direct polarity intermediate circuit 504 to an energy storage capacitor 525, and as a step-up DC-to-DC converter when transferring energy from the energy storage capacitor to the direct polarity intermediate circuit. The converter stage 507 can be operated as a step-down DC-to-DC converter when transferring energy from the energy storage capacitor 525 to a battery 524, and as a step-up DC-to-DC converter when transferring energy from the battery to the energy storage capacitor.

In the exemplifying electronic power converters described above with the aid of figures 1-5, the direct polarity intermediate circuit is a direct voltage intermediate circuit. It should be, however, noted that the principle of implementing two or more converter stages for different purposes with a single module is not limited to electronic power converters comprising a direct voltage intermediate circuit but it is as well applicable to electronic power converters comprising a direct current intermediate circuit. Furthermore, it should be noted that the principle of implementing two or more converter stages for different purposes with a single module is applicable in many different converter architectures. For example, the electronic power converter illustrated in figure 4 could be modified so that the converter stage 406 is implemented with two switching branches of the module 409 instead of only one switching branch, the converter stage 427 is implemented with one switching branch of the module 409, and the converter stage 407 is implemented with a separate six pack module so that the modified converter stage 407 can be a three-phase interleaved DC-to-DC converter.

In the exemplifying electronic power converters described above with the aid of figures 1-4, the modules 109, 209, 309, and 409 which are used for implementing the two or more converter stages for different purposes can be modules where there are internal galvanic contacts between first ends of the switching branches and internal galvanic contacts between second ends of the switching branches. In the exemplifying electronic power converter described above with the aid of figure 5, the module 509 which is used for implementing the converter stages 506 and 507 has to be such that at least the first ends of the switching branches are separately accessible, i.e. there are no internal connections between the first ends of the switching branches.

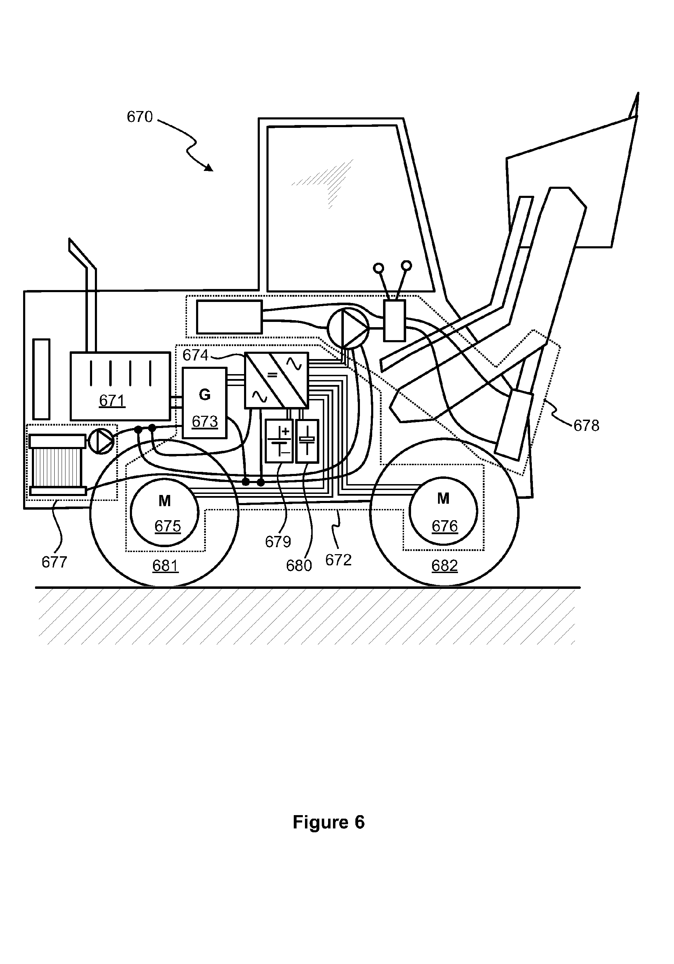

Figure 6 shows an illustration of a mobile working machine 670 according to an exemplifying embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 671 that can be e.g. a diesel engine, an Otto-cycle engine, or a turbine engine. The mobile working machine comprises an electromechanical power transmission chain 672 between the combustion engine and wheels 681, 682 of the mobile working machine. The electromechanical transmission chain comprises a generator 673 the rotor of which is connected to the shaft of the combustion engine. The electromechanical transmission chain comprises an electronic power converter 674 and electrical motors 675, 676 at the hubs of the wheels of the mobile working machine. The electronic power converter 674 is arranged to convert the electrical voltage produced by the generator 673 into electrical voltages having amplitudes and frequencies suitable for the electrical motors 675, 676. In the exemplifying case shown in figure 6, the electronic power converter 674 comprises:
- a direct polarity intermediate circuit,
- a first converter stage between the generator 673 and the direct polarity intermediate circuit,
- a second converter stage between the direct polarity intermediate circuit and a battery 679,
- a third converter stage between the direct polarity intermediate circuit and an energy storage capacitor 680, and
- one or more fourth converter stages between the direct polarity intermediate circuit and the electrical motors 675, 676.

The electronic power converter 674 may have separate fourth converter stages for all the electrical motors 675, 676 in which case each electrical motor can be controlled individually, or a single fourth converter stage can be connected to two or more electrical motors in which case these electrical motors are controlled as a group.

The electronic power converter is implemented with modules each of which having an integrated structure and comprising switching branches, where each of the switching branches comprises a first electrical node, a second electrical node, a third electrical node, and controllable power switches for selecting whether the third electrical node is connected to the first electrical node or to the second electrical node. The above-mentioned first and second converter stages are implemented with a same module so that at least one of the switching branches of the module constitutes at least partly the second converter stage and at least one of the rest of the switching branches of the module constitutes at least partly the third converter stage.

The battery 679 and/or the energy storage capacitor 680 can be used for responding to peak power needs exceeding the maximum power of the combustion engine 671.

A mobile working machine according to an embodiment of the invention comprises a liquid cooling system 677 arranged to cool the electromechanical power transmission chain 672.

A mobile working machine according to an embodiment of the invention comprises a liquid cooling system arranged to cool both a hydraulic system 678 of the mobile working machine and the electromechanical power transmission chain 672.

A mobile working machine according to an embodiment of the invention comprises a liquid cooling system arranged to cool both the electromechanical power transmission chain 672 and the combustion engine 671.

The specific examples provided in the description given above should not be construed as limiting the applicability and/or interpretation of the appended claims.

## Claims

1. An electronic power converter comprising:
- an alternating voltage terminal (101, 201, 301, 501),
- a first direct voltage terminal (102, 202, 302, 502),
- a second direct voltage terminal (103, 203, 303, 503),
- a direct polarity intermediate circuit (104, 204, 304, 504),
- a first converter stage (105, 205, 305, 505) between the alternating voltage terminal and the direct polarity intermediate circuit,
- a second converter stage (106, 206, 306, 506) between the direct polarity intermediate circuit and the first direct voltage terminal, and
- a third converter stage (107, 207, 307, 507) between the second direct voltage terminal and one of the following: the direct polarity intermediate circuit, the first direct voltage terminal,
wherein the electronic power converter comprises first and second modules (108, 109, 208, 209, 308, 309, 508, 509) each of which having an integrated structure and comprising switching branches (110-112, 113-115), each of the switching branches comprising a first electrical node (116), a second electrical node (117), a third electrical node (118), and controllable power switches (119, 120) for selecting whether the third electrical node is connected to the first electrical node or to the second electrical node, and wherein the switching branches of the first module constitute at least partly the first converter stage, **characterized in that** at least one (114, 115) of the switching branches of the second module constitutes at least partly the second converter stage, and at least one (113) of the rest of the switching branches of the second module constitutes at least partly the third converter stage.

2. An electronic power converter according to claim 1, wherein:
- the switching branches of the first module (108, 208, 308, 508) constitute at least partly the first converter stage (105, 205, 305, 505) so that (i) the third electrical nodes are connected to poles of the alternating voltage terminal, (ii) the first electrical nodes are connected to a first pole of the direct polarity intermediate circuit, and (iii) the second electrical nodes are connected to a second pole of the direct polarity intermediate circuit, and
- the at least one of the switching branches of the second module (109, 209, 309, 509) constitutes at least partly the second converter stage (106, 206, 306, 506) so that (i) the first electrical node is connected to the first pole of the direct polarity intermediate circuit, (ii) the second electrical node is connected to the second pole of the direct polarity intermediate circuit, and (iii) the third electrical node is connected to a first pole of the first direct voltage terminal.

3. An electronic power converter according to claim 2, wherein the at least one of the rest of the switching branches of the second module (509) constitutes at least partly the third converter stage (507) so that (i) the first electrical node (516) is connected to the first pole (540) of the first direct voltage terminal (502), (ii) the second electrical node is connected to the second pole of the direct polarity intermediate circuit, and (iii) the third electrical node is connected to a first pole of the second direct voltage terminal (503).

4. An electronic power converter according to claim 2, wherein the at least one of the rest of the switching branches of the second module (109, 209, 309) constitutes at least partly the third converter stage (107, 207, 307) so that (i) the first electrical node is connected to the first pole of the direct polarity intermediate circuit, (ii) the second electrical node is connected to the second pole of the direct polarity intermediate circuit, and (iii) the third electrical node is connected to a first pole of the second direct voltage terminal (103, 203, 303).

5. An electronic power converter according to any of claims 1-4, wherein the electronic power converter comprises an energy storage capacitor (225) connected to the first direct voltage terminal (202), and the second converter stage (206) further comprises an inductor coil (221, 222) on an electrical current path via the energy storage capacitor.

6. An electronic power converter according to any of claims 1-5, wherein the electronic power converter comprises an overvoltage protection resistor (123, 223) connected to the second direct voltage terminal.

7. An electronic power converter according to claim 1 or 6, wherein the electronic power converter comprises a battery (124) connected to the first direct voltage terminal, and the second converter stage (106) further comprises an inductor coil (121, 122) on an electrical current path via the battery.

8. An electronic power converter according to claim 5, wherein the electronic power converter comprises a battery (324) connected to the second direct voltage terminal, and the third converter stage (307) further comprises an inductor coil (326) on an electrical current path via the battery.

9. An electronic power converter according to any of claims 4-8, wherein the first module comprises galvanic contacts between the first electrical nodes of the switching branches of the first module, the first module comprises galvanic contacts between the second electrical nodes of the switching branches of the first module, the second module comprises galvanic contacts between the first electrical nodes of the switching branches of the second module, and the second module comprises galvanic contacts between the second electrical nodes of the switching branches of the second module.

10. An electronic power converter according to any of claims 1-9, wherein the direct polarity intermediate circuit is a direct voltage intermediate circuit comprising a capacitor.

11. An electronic power converter according to any of claims 1-10, wherein the number of the switching branches of the first module is the same as the number of the switching branches of the second module.

12. An electronic power converter according to any of claims 1-11, wherein the second converter stage (106, 206, 306, 506) further comprises an inductor coil (121, 122, 221, 222) on a path of electrical current via the first direct voltage terminal (102, 202, 302, 502).

13. A mobile working machine (670) comprising:
- a combustion engine (671), and
- an electromechanical power transmission chain () between the combustion
engine and one or more wheels (675, 676) of the mobile working machine,
wherein the electromechanical transmission chain comprises at least one electronic power converter (674) according to any of claims 1-12.

14. A mobile working machine according to claim 13, wherein the mobile working machine comprises a liquid cooling system (677) arranged to cool both the electromechanical power transmission chain and a hydraulic system (678) of the mobile working machine.

15. A mobile working machine according to claim 13, wherein the mobile working machine comprises a liquid cooling system (677) arranged to cool both the electromechanical power transmission chain and the combustion engine.
